# EUROPEAN PATENT SPECIFICATION

(11) **EP 2 465 583 B1**
(45) Date of publication and mention of the grant of the patent: **13.07.2016**
(21) Application number: 10400062.5
(22) Date of filing: 20.12.2010
(51) Int. Cl.: A62C 99/00, F24C 7/00, G09B 9/00, G09B 9/16

(54) **Smoke simulator system for aircraft cockpit**
Rauchsimulatorsystem für Flugzeugcockpit
Système de simulateur de fumée pour cockpit d'avion

(43) Date of publication of application: 20.06.2012
(73) Proprietor: AIRBUS HELICOPTERS DEUTSCHLAND GmbH, 86609 Donauwörth (DE)
(72) Inventor: Bohlender, Peter, 63589 Linsengericht (DE)
(74) Representative: GPI & Associés

(56) References cited:
- EP-A2- 1 324 292
- WO-A1-03/063664
- GB-A- 2 281 269
- US-A- 6 129 552
- US-A1- 2007 218 436

## Description

The invention relates to a smoke simulator system for an aircraft cockpit with the features of the preamble of claim 1 and a method of operating such a system with the features of the preamble of claim 11.

A standard emergency situation to be trained by pilots of aircrafts is a fire alarm on board. Up to now real fire simulation inside the cockpit was not possible and any simulation of an on board fire alarm was effected only by warning lights in the aircraft's cockpit. Any real feeling and the visual conditions inside the cockpit and/or crew rooms, such as view to instruments, emergency exits etc., could not be simulated.

The document FR 2846562 discloses a fire simulator with a vertical bin simulating flames by strips of a reflective fabric that wave in an air flow created by fans. The lower part of the bin incorporates a liquid smoke container, a pump, an electric motor and a sound source that reproduces the crackling of a fire. The intensity of a simulated fire can be varied according to the way in which fire extinguishers are operated.

The document FR 2843889 discloses a training system for fire fighters comprising a furnace consisting of a gas burner, which is submerged in water in a tank, means of conveying a combustible gas mixture to said burner and an electrode to ignite the gas at the beginning of a drill. The system is also provided with an ignition system comprising a casing which is positioned close to the aforementioned tank, the inner space thereof being thermally protected, and which is equipped with a heat-resistant tube, the free end of said tube being disposed at a short distance above the surface of the water in the tank. Combustible gas mixtures in combination with a burner imply safety risks.

The EP1324292 discloses a simulator comprising a chamber, visibility-impairing devices connected to the chamber, and orientation devices and rescue devices arranged in the chamber. The visibility-impairing devices include a device for producing smoke, especially a vaporizer for vaporizing a smoke product. This state of the art is used to train users of tunnels, such as car drivers.

WO 03/063664 A1 discloses a smoke simulator system according to the preamble of claim 1.

It is an object of the present invention to provide a smoke simulator system for an aircraft cockpit and a method of operating such a system.

The solution is provided with a smoke simulator system for an aircraft cockpit with the features of claim 1 of the invention and a method of operating such a system with the features of claim 13. Preferred embodiments of the invention are described in the subclaims.

According to the invention a smoke simulator system for an aircraft cockpit, particularly a helicopter cockpit or crew rooms, comprises a water tank and a generator for ultrasonic waves mounted inside said water tank. Supply means for feeding water into said water tank and electrical energy to said generator for ultrasonic waves are provided at the water tank. Outlet means are provided at the water tank to drain smoke produced by the generator for ultrasonic waves from water inside said water tank. The smoke created according to the invention improves simulation by giving a realistic feeling and the visual conditions inside a cockpit and/or crew rooms with respect to instruments emergency exits, etc. in case of a fire on board. Hence a higher training performance for the pilots/crew staff is achieved with the inventive system due to higher level of fire simulation. An advantage of the system according to the invention is that the smoke generated is harmless and heavier than air; thus said smoke remains next to a floor of the cockpit and will therefore most probably not activate any real smoke detectors inside the cockpit/cabin area. Said heavy smoke generated by the system according to the invention can be evacuated fast from the floor and a pilot can train to evacuate the smoke and after this the pilot may go on with further exercises within a relatively short interval. The volume and/or the intensity of the smoke can be regulated easily. The inventive system doesn't need any warm-up but starts directly after being switched on.

According to a preferred embodiment of the invention the ultrasonic generator is located at the bottom of the water tank inside a water sump.

According to a further preferred embodiment of the invention the ultrasonic generator is driven by low current.

According to a further preferred embodiment of the invention the smoke generation is effected by use of a triple head ultrasonic generator for improved transfer of distilled water to smoke.

According to the invention the outlet means are connected to an extension tube with at least one sump drain hole provided at a lowest area of said extension tube to collect condensate resulting from the smoke precipitation inside the *extension* tube and installed smoke outlet tubes.

According to the invention the sump drain hole is connected via a Venturi T-fitting to an airtube reaching into the water tank above diaphragm discs of the ultrasonic-generator, said air pump being driven by an electric diaphragm pump to provide enough pressure in the airtube to reach a Venturi effect in the Venturi T-fitting for transfer of condensate from the sump at the lowest area of the extension tube to the water tank, said transfer enriching the smoke produced by the diaphragm discs of the ultrasonic-generator to stabilize intensity and density of the smoke.

According to a further preferred embodiment of the invention the airfilter is fitted to an inlet port of the electric diaphragm pump to reduce noise and to clean the air used inside the system.

According to a further preferred embodiment of the invention a fan is installed in a top cover of the water tank to allow - preferably remotely controlled - generation of supplemental pressure to press the smoke from the outlet port further through manifold tubes of a manifold to route the smoke to predetermined locations inside the cockpit. A pre defined rerun of the fan after smoke switch off will dry the outlet tubes and cool down the system.

According to a further preferred embodiment of the invention a microcontroller is provided to control the operation of air pump, fan and ultrasonic generator for customized smoke production according to an air volume of the cockpit, and an automatic maintenance program to allow drying, cooling and cleaning of the system.

According to a further preferred embodiment of the invention a remote receiver circuit is provided to switch off the system if there is a simulated fire activated inside the cockpit.

According to a further preferred embodiment of the invention an original cabin/cockpit fire extinguisher is provided with a remote trigger function to switch off the system with a trigger switch actuated by the agent release handle, said fire extinguisher being equipped with an electronic chamber with a remote module and an output to an antenna to communicate any signal from the trigger switch via the remote module and the antenna.

According to a further preferred embodiment of the invention the fire extinguisher comprises a pressure tank and a pressure gage indicating the pressure in the pressure tank. Pressurized air can be delivered from the pressure tank through the nozzle if the handle is actuated to have the original sound of extinguishing.

According to a preferred embodiment of the invention a method of operating the system is characterized by filling distilled water into the water tank to entirely submerge the ultrasonic-generator, supplying low current electric energy to the ultrasonic-generator, switching on the ultrasonic-generator to produce smoke by means of the submerged diaphragm discs of the ultrasonic-generator and discharging the smoke through the outlet port of the water tank.

According to a further preferred embodiment of the invention a fan is actuated inside the top cover of the water tank to produce supplemental pressure inside said water tank to press the smoke from the outlet port further through the manifold tubes of the manifold to route the smoke to predetermined locations inside the cockpit.

According to a further preferred embodiment of the invention water condensation is collected next to a sump drain hole in the extension tube and said water condensation is pumped back into the water tank via an airtube using a Venturi effect to submerge the ultrasonic-generator entirely in the water sump of the water tank.

According to a further preferred embodiment of the invention the system is switched off with either its remote receiver circuit and/or by the fire extinguisher with its installed remote switch. Improved simulation is achieved when the handle of the fire extinguisher is actuated by the pilot/crew and the air filling compressed in the pressure tank of the fire extinguisher is ejected through the nozzle to stop the smoke in the cockpit like in a real fire fighting process.

Preferred embodiments of the invention are described in the following description with reference to the attached drawings.
Fig. 1 shows a schematic view of a smoke simulator system for an aircraft cockpit according to the invention, and
Fig. 2 shows a schematic view of an element of the smoke simulator system of Fig. 1.

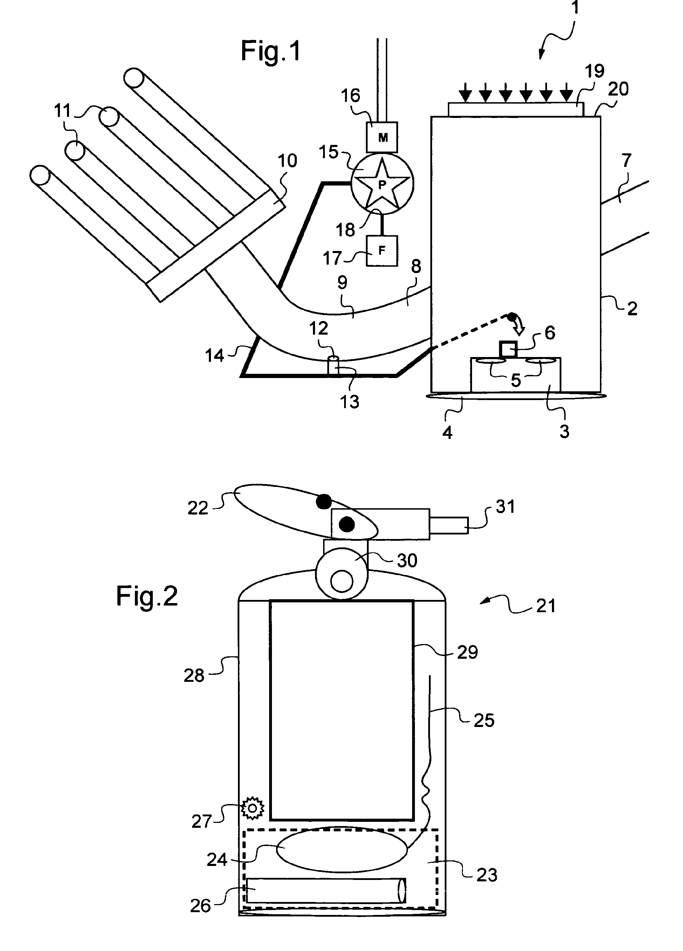

According to Fig. 1 a smoke simulator system 1 for an aircraft cockpit (not shown) comprises a water tank 2 with the shape of a circular tube. The diameter of said water tank 2 is about 100 mm. The water tank 2 is water tight and made of plastic material.

An ultrasonic-generator 3 is located inside the water tank 2 on a lower cover 4. The lower cover 4 is tightened by means of a gasket to the water tank 2. The ultrasonic-generator 3 is provided with diaphragm discs 5 for generating ultrasonic waves. In operation of the system 1 the ultrasonic-generator 3 is submerged with its diaphragm discs 5 inside a water sump. A fluid sensor 6 is provided to detect the water level above the diaphragm discs 5 of the ultrasonic-generator 3. A common tuning of the system 1 will be that the water level in the water tank 2 is at least 20 mm above the diaphragm discs 5 of the ultrasonic-generator 3, an automatic switch off function (not shown) will be activated by the fluid sensor 6 if the water level goes below said minimum.

The water tank 2 is provided with supply means 7 such as a cable port pointing upward. Said cable port 7 may be used to refill distilled water a little enriched with special nontoxic fog fluid. Said cable port 7 may be used as well as an inspection hole for the water tank 2. Outlet means 8 such as an outlet port of the water tank 2 comprise an extension tube 9 and a manifold 10 with four manifold tubes 11 serving as smoke outlet. Said extension tube 9 is pointing up about 45° from the outlet port 8 and has a diameter of approximately 70 mm.

A sump drain hole 12 is provided at a lowest area of the extension tube 9. A Venturi T-fitting 13 is installed with its inlet side in the sump drain hole 12. An airtube 14 is connected to an outlet side of the Venturi T-fitting 13 said airtube 14 reaching into the water tank 2 above the diaphragm discs 5 of the ultrasonic-generator 3. An air pump 15 driven by an electric diaphragm pump 16 provides enough pressure in airtube 14 to reach a Venturi effect in the Venturi T-fitting 13 for transfer of condensate from the sump at the lowest area of the extension tube 9 to the water tank 2. An airfilter 17 is fitted on an inlet port 18 of the electric diaphragm pump 16.

A fan 19 is installed in a top cover 20 on top of the water tank 2.

A microcontroller (not shown) is provided to control the operation of system 1 for customized smoke production according to the situation and any air volume of the cockpit and a predefined maintenance cleaning program. A remote receiver circuit (not shown) is provided to switch off system 1 if there is an input from the simulator extinguisher or a real fire alarm.

According to Fig. 2 a fire extinguisher 21 is provided with a remote trigger function to switch off system 1 with a trigger switch

(not shown) if a discharge valve of said fire extinguisher 21 is actuated by a handle 22. The fire extinguisher 21 is equipped with an electronic chamber 23 with a remote module 24 and an output to an antenna 25. The signal from the trigger switch is communicated via the remote module 24 and the antenna 25. A battery 26 is provided for supply of the remote module 24. A charge connector 27 in the casing 28 of the fire extinguisher 21 is connected to the battery 26 for charging.

The fire extinguisher 21 comprises a pressure tank 29 and a pressure gage 30 indicating the pressure in the pressure tank 29. Pressurized air can be delivered from the pressure tank 29 through nozzle 31 if handle 22 is actuated. A normal cockpit rotorcraft/aircraft fire extinguisher may be modified to comprise the features described before and marked with a label to be used as "For simulation only".

The system 1 comprises a supplemental control via simulation computers (not shown).

### A method to operate system 1

Distilled water is filled into the water tank 2 via the cable port 7 till the ultrasonic-generator 3 is entirely submerged. Low current electric energy is supplied to the ultrasonic-generator 3. The ultrasonic-generator 3 is switched on and the smoke produced by the submerged diaphragm discs 5 of the ultrasonic-generator 3 is discharged through the outlet port 8 of the water tank 2 by its gravity because the generated smoke is heavier than the ambient air.

The fan 19 inside the top cover 20 is actuated to produce supplemental pressure to press the smoke from the outlet port 8 further through the manifold tubes 11 of manifold 10 to route the smoke to predetermined locations inside the cockpit. Water condensation in the extension tube 9 due to smoke generation is collected next to a sump drain hole 12 and pumped back via an airtube 14 using a Venturi effect to the water sump submerging the ultrasonic-generator 3.

If system 1 is not switched off by means of its remote receiver circuit the special cockpit fire extinguisher 21 may be actuated with its installed remote switch 22, 24 and 25. When the handle 22 of the special cockpit fire extinguisher 21 is actuated the air filling compressed in the pressure tank 29 is ejected through the nozzle 31 to stop the smoke with real discharge sound like in a real fire fighting process. A signal is provided from the trigger switch after actuation of the handle 22 and said signal is sent by means of the remote module 24 and the antenna 25 to switch off system 1.

## Claims

1. A smoke simulator system (1) for an aircraft cockpit said system (1) comprising
a water tank (2),
an ultrasonic generator (3), said ultrasonic generator (3) being inside said water tank (2),
supply means (7) to said water tank (2) and
outlet means (8) from said water tank (2) for smoke **characterized in that** said outlet means (8) are connected to an extension tube (9) with at least one sump drain hole (12) provided at a lowest area of said extension tube (9), the sump drain hole (12) being connected via a Venturi T-fitting (13) to an airtube (14) reaching into the water tank (2) above the diaphragm discs (5) of the ultrasonic-generator (3) and said air pump (15) being driven by an electric diaphragm pump (16) to provide enough pressure in the airtube (14) to reach a Venturi effect in the Venturi T-fitting (13) for transfer of condensate from the sump at the lowest area of the extension tube (9) to the water tank (2).

2. The system (1) according to claim 1,
**characterized in that** the ultrasonic generator (3) is located at the bottom of the water tank (2) inside a water sump.

3. The system (1) according to claim 1,
**characterized in that** the ultrasonic generator (3) is driven by low current.

4. The system (1) according to claim 1,
**characterized in that** the ultrasonic generator (3) is provided with a triple head to transfer water to smoke.

5. The system (1) according to claim 1,
**characterized in that** the airfilter (17) is fitted on an inlet port (18) of the electric diaphragm pump (16).

6. The system (1) according to claim 1,
**characterized in that** a fan (19) is installed in a top cover (20) on top of the water tank (2).

7. The system (1) according to claim 1,
**characterized in that** a microcontroller is provided to control the operation for customized smoke production according to an air volume of the cockpit, said microcontroller comprising a time relais and predefined maintenance programs.

8. The system (1) according to claim 1,
**characterized in that** a remote receiver circuit is provided.

9. The system (1) according to claim 1,
**characterized in that** a fire extinguisher (21) is provided with a remote trigger function with a trigger switch actuated by a handle (22), said fire extinguisher (21) comprising an electronic chamber (23) with a remote module (24) and an output to an antenna (25).

10. The system (1) according to claim 1,
**characterized in that** the fire extinguisher (21) comprises a pressure tank (29) and a pressure gage (30) indicating the pressure in the pressure tank (29).

11. A method of operating the system according to any of the preceding claims,
**characterized by** filling water into the water tank (2) to entirely submerge the ultrasonic-generator (3), supplying low current electric energy to the ultrasonic-generator (3), switching on the ultrasonic-generator (3) to produce smoke by means of the submerged diaphragm discs (5) of the ultrasonic-generator (3) and discharging the smoke through the outlet port (8) of the water tank (2).

12. The method according to claim 11,
**characterized by** actuating and regulating the fan (19) inside the top cover (20) to produce supplemental pressure to press the smoke from the outlet port (8) further through the manifold tubes (11) of manifold (10) and to route the smoke to predetermined locations inside the cockpit.

13. The method according to claim 11,
**characterized by** collecting water condensation in the extension tube (9) next to a sump drain hole (12) and pumping said condensation back into the water tank (2) via an airtube (14) using a Venturi effect.

14. The method according to claim 11,
**characterized by** switching off system (1) with either its remote receiver circuit or the fire extinguisher (21) with its installed remote switch (22, 24 and 25) by providing a signal from the trigger switch.

15. The method according to claim 11,
**characterized by** running of the fan (19) after switching off the smoke.

16. The method according to claim 11,
**characterized by** running predefined maintenance programs by means of the microcontroller.

## Patentansprüche

1. Rauchsimulatorsystem (1) für ein Luftfahrzeug-Cockpit, wobei das System (1) aufweist:
einen Wassertank (2),
einen Ultrachallgenerator (3), der innerhalb des Wassertanks (2) angeordnet ist,
Zuführungsmittel (7) zu dem Wassertank (2) und
Austrittsmittel (8) von dem Wassertank (2) für Rauch,
**dadurch gekennzeichnet, dass** die Austrittsmittel (8) mit einem Verlängerungsrohr (9) mit mindestens einer Ablassöffnung (12), die in einem tiefsten Bereich des Verlängerungsrohrs (9) vorgesehen ist, verbunden sind, wobei die Sumpf-Ablassöffnung (12) über ein Venturi-T-Stück (13) mit einem Luftrohr (14) verbunden ist, das über den Membranscheiben (5) des Ultraschallgenerators (3) in den Wassertank (2) hineinreicht, und wobei die Luftpumpe (15) durch eine elektrische Membranpumpe (16) angetrieben wird, um ausreichend Druck in dem Luftrohr (14) zu erzeugen, um einen Venturieffekt in dem Venturi-T-Stück (13) zu erzielen für die Verbringung von Kondensat von dem Sumpf in dem niedrigsten Bereich des Verlängerungsrohrs (9) in den Wassertank (2).

2. System (1) nach Anspruch 1,
**dadurch gekennzeichnet, dass** der Ultraschallgenerator (3) am Boden des Wassertanks (2) in einer Wasserwanne angeordnet ist.

3. System (1) nach Anspruch 1,
**dadurch gekennzeichnet, dass** der Ultraschallgenerator (3) mit Schwachstrom betrieben wird.

4. System (1) nach Anspruch 1,
**dadurch gekennzeichnet, dass** der Ultraschallgenerator (3) mit einem Dreifach-Kopf für die Überführung von Wasser in Rauch versehen ist.

5. System (1) nach Anspruch 1,
**dadurch gekennzeichnet, dass** der Luftfilter (17) an einem Ansaugstutzen (18) der elektrischen Membranpumpe (16) befestigt ist.

6. System (1) nach Anspruch 1,
**dadurch gekennzeichnet, dass** ein Ventilator (19) in einer oberen Abdeckung (20) an der Oberseite des Wassertanks (2) installiert ist.

7. System (1) nach Anspruch 1,
**dadurch gekennzeichnet, dass** ein Mikrokontroller vorgesehen ist zur Steuerung einer angepassten Raucherzeugung nach Maßgabe eines Luftvolumens des Cockpits, wobei der Mikrokontroller einen Zeitschalter und vorbestimmte Wartungsprogramme umfasst.

8. System (1) nach Anspruch 1,
**dadurch gekennzeichnet, dass** eine Fernsteuerschaltung vorgesehen ist.

9. System (1) nach Anspruch 1,
**dadurch gekennzeichnet, dass** ein Feuerlöscher (21) mit einer Fernsteuerungs-Triggerfunktion versehen ist, mit einem Triggerschalter, der durch einen Griff (22) betätigt wird, wobei der Feuerlöscher (21) einen Elektronikkasten (23) mit einem Fernsteuerungsmodul (24) und einen Ausgang zu einer Antenne (25) aufweist.

10. System (1) nach Anspruch 1,
**dadurch gekennzeichnet, dass** der Feuerlöscher (21) einen Drucktank (29) und einen Druckmesser (30), der den Druck in dem Drucktank (29) anzeigt, aufweist.

11. Verfahren zum Betreiben des Systems nach einem der vorstehenden Ansprüche,
**gekennzeichnet durch** Einfüllen von Wasser in den Wassertank (2), um den Ultraschallgenerator (3) vollständig einzutauchen, Speisen des Ultraschallgenerators (3) mit Schwachstrom, Anschalten des Ultraschallgenerators (3), um Rauch mit den eingetauchten Membranscheiben (5) des Ultraschallgenerators (3) zu erzeugen, und Ablassen des Rauchs **durch** den Austrittsstutzen (8) des Wassertanks (2).

12. Verfahren nach Anspruch 11,
**gekennzeichnet durch** Betätigen und Regeln des Ventilators (19) in der oberen Abdeckung (20) zur Erzeugung eines zusätzlichen Drucks, um den Rauch von dem Austrittsstutzen (8) weiter **durch** die Verteilerrohre (11) des Verteilers (10) zu pressen, und den Rauch an vorbestimmte Stellen innerhalb des Cockpits zu leiten.

13. Verfahren nach Anspruch 11,
**gekennzeichnet durch** Sammeln von Wasserkondensat in dem Verlängerungsrohr (9) in der Nähe einer Ablassöffnung (12) und Pumpen des Kondensats zurück in den Wassertank (2) über ein Luftrohr (14) unter Anwendung eines Venturieffekts.

14. Verfahren nach Anspruch 11,
**gekennzeichnet durch** Ausschalten des Systems (1) entweder mit dessen Fernsteuerungsschaltung oder mit dem Feuerlöscher (21) durch dessen eingebauten Fernsteuerungsschalter (22, 24 und 25) durch Ausgeben eines Signals von dem Triggerschalter.

15. Verfahren nach Anspruch 11,
**gekennzeichnet durch** Betätigen des Ventilators (19) nach dem Ausschalten des Rauchs.

16. Verfahren nach Anspruch 11,
**gekennzeichnet durch** Durchführen vorbestimmter Wartungsprogramme mit dem Mikrokontroller.

## Revendications

1. Système formant simulateur de fumée (1) pour une cabine de pilotage d'avion, ledit système (1) comprenant
un réservoir d'eau (2),
un générateur d'ultrasons (3), ledit générateur d'ultrasons (3) étant à l'intérieur dudit réservoir d'eau (2),
un moyen d'approvisionnement (7) dudit réservoir d'eau (2) et
des moyens de sortie (8) provenant dudit réservoir d'eau (2) pour la fumée, **caractérisé en ce que** lesdits moyens de sortie (8) sont reliés à un tube d'extension (9) avec au moins un trou de vidange de carter (12), prévu dans une zone la plus basse dudit tube d'extension (9), le trou de vidange de carter (12) étant relié, par l'intermédiaire d'un raccord de Venturi en T (13), à un tube d'air (14) qui rejoint le réservoir d'eau (2), au-dessus de disques à membrane (5) du générateur d'ultrasons (3) et une pompe à air (15) étant entraînée par une pompe électrique à membrane (16), pour fournir une pression suffisante dans le tube d'air (14) pour obtenir un effet de Venturi dans le raccord de Venturi en T (13), afin de transférer le condensat provenant du carter dans la zone la plus basse du tube d'extension (9) vers le réservoir d'eau (2).

2. Système (1) selon la revendication 1,
**caractérisé en ce que** le générateur d'ultrasons (3) est situé au fond du réservoir d'eau (2) à l'intérieur d'un carter à eau.

3. Système (1) selon la revendication 1,
**caractérisé en ce que** le générateur d'ultrasons (3) est entraîné par un courant faible.

4. Système (1) selon la revendication 1,
**caractérisé en ce que** le générateur d'ultrasons (3) est prévu avec une tête triple, pour transformer l'eau en fumée.

5. Système (1) selon la revendication 1,
**caractérisé en ce que** le filtre à air (17) est ajusté sur un orifice d'entrée (18) de la pompe électrique à membrane (16).

6. Système (1) selon la revendication 1,
**caractérisé en ce qu'**un ventilateur (19) est installé dans un couvercle supérieur (20) au sommet du réservoir d'eau (2).

7. Système (1) selon la revendication 1,
**caractérisé en ce qu'**un microcontrôleur est prévu, pour contrôler le fonctionnement de la production de fumée adaptée aun volume d'air de la cabine de pilotage, ledit microcontrôleur comprenant un relais temporisé et des programmes d'entretien prédéfinis.

8. Système (1) selon la revendication 1, **caractérisé en ce qu'**un circuit de réception à distance est prévu.

9. Système (1) selon la revendication 1,
**caractérisé en ce qu'**un extincteur d'incendie (21) est prévu, avec une fonction de déclenchement à distance, avec un interrupteur de déclenchement actionné par une poignée (22), ledit extincteur d'incendie (21) comprenant un compartiment électronique (23) avec un module de déclenchement à distance (24) et une sortie vers une antenne (25).

10. Système (1) selon la revendication 10,
**caractérisé en ce que** l'extincteur d'incendie (21) comprend un réservoir de pression (29) et un manomètre (30) indiquant la pression dans le réservoir de pression (29).

11. Procédé de fonctionnement du système selon l'une quelconque des revendications précédentes,
**caractérisé par** le remplissage d'eau du réservoir d'eau (2) pour submerger entièrement le générateur d'ultrasons (3), la fourniture d'énergie électrique à courant faible au générateur d'ultrasons (3), la commutation en marche du générateur à ultrasons (3) pour produire de la fumée au moyen des disques à membrane submergés (5) du générateur d'ultrasons (3) et l'évacuation de la fumée à travers l'orifice de sortie (8) du réservoir d'eau (2).

12. Procédé selon la revendication 11,
**caractérisé par** l'actionnement et à régulation du ventilateur (19) à l'intérieur du couvercle supérieur (20), pour produire une pression supplémentaire afin de forcer la fumée provenant de l'orifice de sortie (8) à travers les tubes de collecteur (11) du collecteur (10) et l'acheminement de la fumée vers des emplacements prédéterminés à l'intérieur de la cabine de pilotage.

13. Procédé selon la revendication 11,
**caractérisé par** la collecte de condensation d'eau dans le tube d'extension (9) près d'un trou de vidange du carter (12) et le renvoi de ladite condensation par pompage à nouveau dans le réservoir d'eau (2) par l'intermédiaire d'un tube d'air (14), en utilisant un effet Venturi.

14. Procédé selon la revendication 11,
**caractérisé par** l'arrêt du système (1) avec soit son circuit de réception à distance, soit l'extincteur d'incendie (21) où est installé son interrupteur de déclenchement à distance (22, 24 et 25) en fournissant un signal provenant de l'interrupteur de déclenchement.

15. Procédé selon la revendication 11,
**caractérisé par** la mise en fonction du ventilateur (19) après avoir arrêté la fumée.

16. Procédé selon la revendication 11,
**caractérisé par** l'exécution des programmes de d'entretien prédéfinis au moyen du microcontrôleur.
